# EUROPEAN PATENT SPECIFICATION

(11) **EP 3 398 800 B1**
(45) Date of publication and mention of the grant of the patent: **14.10.2020**
(21) Application number: 17290057.3
(22) Date of filing: 02.05.2017
(51) Int. Cl.: B60K 15/077, B60T 11/26, B60S 1/50, B60K 15/04, B60K 15/035, B60T 17/22

(54) **CONTAINER FOR A FLUID IN A VEHICLE**
BEHÄLTER FÜR EIN FLUID IN EINEM FAHRZEUG
RÉCIPIENT POUR UN FLUIDE DANS UN VÉHICULE

(43) Date of publication of application: 07.11.2018
(73) Proprietor: MANN+HUMMEL GmbH, 71636 Ludwigsburg (DE)
(72) Inventor: De Cara, Gerald, 53150 Montsurs (FR)
(74) Representative: Seyboth, Matthias

(56) References cited:
- DE-A1- 3 206 520
- US-A- 4 026 319
- US-A1- 2006 048 848

## Description

### Technical field

The present invention relates to a container for a fluid in a vehicle, a vehicle and a method for storing a fluid.

### Prior art

Vehicles such as car and trucks usually need to be provided with various liquids such as brake fluid to ensure a good functioning of the vehicle. It is known to store these liquids in containers inside the vehicle. A cap may close the containers to avoid spilling the liquids. The cap may comprise a valve for ensuring pressure equalization between the inside and the outside of the container. However, when the vehicle is on an inclined road or when the vehicle accelerates/decelerates, the liquid inside the container is pushed towards one side of the container, and may enter into contact with the valve. This may result in an undesired spillage of the liquid. Further, the designed space in a motor compartment may limit the shape and size of such containers.

The US 2006/048848 A1 shows hydraulic fluid reservoir. In order to prevent hydraulic fluid infiltrating out from a hydraulic fluid tank when a vehicle is in operation, the hydraulic fluid infiltrating provided for the tank to be compartmentalized by an anti-overflow partition. The anti-overflow partition is made in such a manner as to hold air captive inside the tank in the vicinity of a feed orifice at a location placed in a top portion of said anti-overflow partition.

From US 4 026 319 A an hydraulic reservoir is known for a dual circuit braking system of the kind comprising a container divided into two chambers by a partition provided with a hole at an intermediate height, and a fluid level sensor located in one chamber, in which the chambers are sealed from each other in use apart from the hole in the partition, and one of the chambers is sealed against atmosphere by sealing means which can be released to allow leveling of the fluid during filling.

The DE 32 06 520 A1 displays a valve arrangement for a compensating reservoir in a hydraulic brake system with a threaded cover encompassing the filling opening of a filling socket has an inlet channel, and an outlet channel sealable by an inlet valve and an outlet valve. The inlet channel and the outlet channel are separate channels arranged in the threaded cover.

In view of the above, it is one object of the present invention to provide an improved container for a vehicle. It is a further object to provide a method for storing a fluid, in particular a brake fluid in a container.

### Disclosure of the invention

Accordingly, a container for a fluid in a vehicle is provided. The container comprises:
an inlet for filling the fluid into the container, the inlet being arranged at a top wall or top edge of the container, the inlet being adapted to couple with a cap for closing the inlet, the cap comprising a valve for a pressure equalization;
an inner wall protruding from around the inlet into the interior space of the container, thereby forming an air trapping volume for trapping air; wherein
the air trapping volume is delimited by the inlet, the inner wall, the cap and a fluid surface inside the container when the container is used;
the protrusion of the inner wall is configured such that the valve remains separated from the fluid by the air trapped in the air trapping volume if the fluid surface is inclined about an axis.

In particular, the fluid may be a brake fluid and the container may be a brake fluid container. Further, any other fluid, such as an engine coolant or a windshield washer fluid may be used.

The vehicle may be an automobile, a motorcycle, a truck or a bike capable of accommodating the container. One can contemplate of other application such as aerial or navel vehicles or trains. The container may be located under the bonnet of the vehicle in a motor compartment. In the present application, the word "container" designates a tank or reservoir.

The container is preferably tight to the fluid comprised therein. The container may be made of a material that resists to the fluid comprised therein such as a plastic material. The shape of the container may be prescribed by the surrounding vehicle parts, such as a motor, a battery or other containers. The container may have an elongated shape. The inlet of the container is an opening on a top wall, top edge or top corner of the container. The top side of the container refers to a side of the container that is on the top when the container is appropriately mounted in the vehicle at rest located on a flat road. The inlet may be located at the highest point of the container to facilitate filling the container with fluid. The inlet may be located such that it is easily accessible for a user and such that the user can fill the fluid into the container without having to remove the container from the vehicle. For example, it can be located on the top edge of an elongated container. In embodiments, the inlet is attached to a top and front outer wall of the container, in particular in a forward direction, when in use in a vehicle.

The inlet may be a container neck, in particular a tube-shaped neck, which protrudes towards the outside of the container. The inlet may comprise, on an outer surface thereof, an outer winding coupling with an inner winding of the cap. To close the container, the cap may be screwed onto the inlet. The cap may be of the same material as the container. The cap may be fitted onto the inlet such as to be tight to the fluid comprised in the container. For example, this is achieved by means of a rubber diaphragm ensuring a sealing between the cap and the inlet.

The valve, which may be part of the cap, may be used to ensure pressure equalization between the inside and the outside of the container. In other words, the valve may ensure that a pressure inside the container is at atmospheric pressure. For example, the rubber diaphragm may encompass one or several holes of such a valve. Further, the valve may be a pressure relief valve. A predetermined opening threshold of the valve may be a pressure value of the pressure inside the container above which the valve opens automatically.

The inner wall forming a part of the air trapping volume may be tube-shaped and extend from the inlet towards the inside of the container. According to the invention, the inner wall separates the container into two container portions. The inner wall may be fluid tight. Further, the inner wall may be integrally formed with the container. A sectional shape of the inner wall may be circular, oval, square, rectangular or the like.

The interior of the container may form a space for holding the brake fluid. The volume of the container that is not filled with the fluid may be filled with air. Although the word "air" is used in the present application, it is understood that said air does not have to be pure air and may comprise some gases from the fluid comprised in the container.

The fluid surface may be a contact surface between the fluid filled inside the container and air filling the remaining of the container. When the fluid surface is in a rest or horizontal position, namely when the vehicle is not accelerating/decelerating and is on a non-inclined road, the fluid inside the container may form a layer at the bottom of the container and the air forms a layer at the top of the container, directly above the layer of fluid and in contact therewith. In this case, the fluid surface is smooth and perpendicular to gravity. Moreover, the air trapping volume may be a portion of the air layer.

The air trapping volume may trap air right below the valve, in particular around the valve. The valve may not enter in contact with the liquid even if the fluid is whirled up by movements of the container and/or of the vehicle, namely even if the fluid surface is inclined about the axis. The axis may be an axis running through the container, in particular an axis that is parallel to a bottom edge of the container. The fluid surface may be inclined by inclination of the container along the axis. The fluid can in particular be pushed towards one side of the container.

Thereby, a spillage of the fluid can be avoided. Advantageously, the container does not leak any fluid, whereby the user of the vehicle does not have to refill the container more often than necessary. The vehicle can be operated safely without risk of lacking of the fluid contained in the container. Further, it can be avoided that highly corrosive fluids such as brake fluids are poured onto surrounding parts of the vehicle, thereby avoiding damaging the vehicle.

If the inlet is located on a top edge of an elongated container, there is a risk that the fluid reaches the valve when the fluid surface is inclined only by a small amount. Even in this case, the air trapped in the air trapping volume ensures that the fluid does not contact the valve by remaining between the fluid and the valve. Therefore, spillage of fluid can be avoided even for elongated containers.

Moreover, the spillage of fluid can be avoided by means of the inner wall. Thus, the container according to this embodiment provides a simple and cheap solution to the problem of avoiding spillage of fluid.

The fluid surface can be inclined by an acceleration of the vehicle, a deceleration of the vehicle and/or by an inclination of the vehicle on an inclined road. In particular, the fluid surface can be inclined when the vehicle is driving or at rest/parked on an inclined road. The fluid may be pushed towards one side of the container by such movements. Spillage of the fluid can be avoided in all normal conditions of use of the container inside the vehicle, even on steep roads or during strong acceleration/deceleration phases.

According to a further embodiment, the inner wall separates the fluid surface into a first fluid surface section and a second fluid surface section, the first fluid surface section being in contact with the air trapping volume. The first fluid surface section is in particular entirely in contact with the air trapping volume.

In embodiments the first surface section is smaller than the second surface section under normal or designated use of the container with a designated amount of fluid. E.g. under designated use, the protruding inner wall intersects the level of fluid in the container thereby separating the first and the second surface section from one another. In preferred embodiments, the second surface section has a superficial area at least twice as large as the first surface section, more preferred four times as large, under normal or designated use of the container with a designated amount of fluid.

In particular, the amount of fluid in the container is large enough so that the fluid surface is higher than the bottom of the inner wall when the container is mounted in a vehicle and filled with a designated amount of fluid. The inner wall may then separate the liquid surface into the first and second fluid surface sections. The second fluid surface section may correspond to a portion of the fluid surface that is not in contact with the air trapping volume at all. According to the present embodiment, the air trapping volume is delimited by the inlet, the inner wall, the cap, and the first fluid surface section.

According to a further embodiment, the first fluid surface section is lower than the second fluid surface section when the fluid surface is inclined about the axis.

When the fluid surface is not inclined, namely when it is in the rest position, the first and second fluid surface sections may be at a same level, independently of the shape of the container, as defined by the principle of communicating vessels. When the fluid surface is inclined, the first and second fluid surface sections may remain parallel. However, they may not be at the same level due to the geometry of the container with the inner wall. The difference in height between the first and second fluid surface sections can be measured along a line that is orthogonal to the first and second fluid surface sections.

According to a further embodiment, the predetermined opening pressure threshold of the valve is smaller than a pressure caused by a thermal expansion of the fluid and/or of the air contained in the container, and larger than a pressure inside the air trapping volume caused by inclining the fluid surface and a height difference between the first and the second fluid surface section along an axis that is perpendicular to the first and second fluid surface sections when the fluid surface is inclined.

The fluid and/or the air may expand due to thermal expansion, for example when the outdoor temperature changes. In particular, when the temperature increases, the fluid expands and the pressure inside the container increases. To avoid any breakage of the container, the valve may equalize the pressure inside the container to the pressure outside the container. For this purpose, the valve may open such as to let air through when the pressure within the container is equal to or greater the predetermined opening pressure threshold of the valve.

Moreover, the pressure in the air trapping volume may increase due to the height difference between the first and the second fluid surface section when the fluid surface is inclined, for example when the vehicle is parked on an inclined road. Namely, if the second fluid surface section is higher than the first fluid surface section, the second fluid surface section exerts a pressure on the first fluid surface section, thereby increasing a pressure or the air in the air trapping volume. However, it may be undesired that the valve opens due to a simple increase in pressure due to the inclination of the fluid surface and the height difference between the first and the second fluid surface section. Indeed, this would cause the air trapped in the air trapping volume to escape through the valve, thereby no longer separating the fluid and the valve. The valve and the fluid would then enter in contact, which would cause a problematic leakage of the fluid. Hence, the predetermined opening pressure threshold of the valve is chosen to be larger than the pressure inside the air trapping volume caused by inclining the fluid surface and the height difference between the first and the second fluid surface section to avoid any spillage of fluid.

According to a further embodiment, a part of the inner wall is formed by a container wall. The inner wall may include a portion of the container wall. For example, a sectional view of the inner wall protruding into the container from around the inlet is a semi-circle closed by the container wall. According to the present embodiment, forming the inner wall requires a particularly small amount of material, thereby reducing the cost of the container.

According to a further embodiment, the inner wall protrudes into the interior space of the container by at least one fifth, preferably one quarter, and more preferred by at least one third of a maximum height of the container.

The maximum height of the container is defined by the distance between the lowest and the highest point of the container along a vertical axis that is parallel to gravity when the container is not inclined. The inner wall may protrude into the interior space by a distance large enough such as to efficiently trap the air in the air trapping volume for avoiding any contact between the fluid and the valve.

According to the invention, a designated maximum filling level of the fluid in the container corresponds to an amount of fluid having more than 75% up to 90% of an inner volume of the container.

The designated maximum filling level of the fluid in the container may represent a volume of fluid in terms of a total volume of the container that can safely be filled into the container without risking any leakages of fluid. Even when filling the container at more than 80%, the container can still be safely operated, without leaking any fluid. A volume of air trapped within the container represents at least 10% of the total volume of the container.

Advantageously, the fluid surface can be inclined about the axis by a maximum of 40° with respect to a rest fluid surface that is perpendicular to gravity so that no fluid enters the cap and/or the valve.

The fluid surface may be inclined by up to 30°, in particular by up to 40° without entering in contact with the cap and/or the valve, thereby guaranteeing a leakage proof container.

According to the invention, the inner wall separates the container into a first and a second container portion, and the first and second container portions are communicatively connected to allow a flow of fluid there between. A respective container portion can enclose a volume in the container.

In particular, the first and second container portions or chambers are not closed portions but are rather communicatively connected to each other such that the fluid can freely flow between the two container portions. The first container portion may be delimited by the inner wall, the inlet, the cap and a bottom separating wall. The bottom separating wall is approximately horizontal, in particular perpendicular to gravity when the container is in its rest position. It may separate the first container portion from the second container portion. The bottom separating wall may be formed integrally with the container wall or with the inner wall. Moreover, the bottom separating wall may be a portion of the container wall, for example a portion of the container bottom.

In another embodiment the bottom separating wall is inclined to gravity when the container is in its rest position.

The second container portion may be delimited by the inner wall, the container walls and the bottom separating wall. The second container portion may comprise a plurality of sub-portions or be separated into several sections. When filling the fluid into the container, it might flow through the first container portion before flowing into the second container portion. In the container rest position, the second container portion may be arranged below the first container portion to facilitate the flow of fluid into the second container portion. Further, in the container rest position, the second container portion may be arranged below and shifted from the first container portion.

Instead of being horizontally separated by the bottom separating wall, the first and second container portions may be communicatively connected to each other along a horizontal communication portion, such that the fluid can be exchanged between the first and second container portions along a vertical direction when the container is in its rest position.

According to the invention, the container comprises a conduit for communicatively coupling the first and second container portions, the conduit comprising a conduit mouth to allow a flow of air between the first and second container portions when the conduit mouth is not covered by the fluid. In particular, the conduit conducts fluid and/or air between the first and second container portions.

The conduit may be formed by the inner wall and/or the bottom separating wall itself. The conduit may also be a pipe. The conduit may be a passage between the first and second container portions wound around the inner wall and ending in the second container portion.

The conduit mouth is an opening, a hole or an outlet of the conduit leading into the first container portion. Air may be exchanged through the conduit and the conduit mouth between the first and second container portions. Thereby, a pressure of the air in the first container portion may be set equal to the pressure of the air in the second container portion. The conduit and the conduit mouth are used for air evacuation through the inlet while filling the fluid into the container. Namely, the air initially present in the second container portion is replaced by fluid at filling, and the initial air is evacuated through the conduit. Thereby, filling of the fluid into the container is facilitated. To allow a flow of air between the first and second container portions, the conduit mouth may not be covered by the fluid. The maximum filling level of the container lies below the conduit mouth such that the air flow is at least allowed in the container's rest position.

According to a further embodiment, the conduit mouth is located such as to be covered by the fluid when the fluid surface is inclined about the axis by more than a predetermined angle, thereby blocking the flow of air between the first and second container portions.

In particular, when the fluid surface is inclined by an amount smaller than the predetermined angle, the first and second fluid surfaces are at an equal level/height, as in the container's rest position, and the air flow between the first and second container portions is enabled. When the fluid surface is inclined by more than the predetermined angle, the fluid may reach the conduit mouth and may block said conduit mouth such as to close the conduit. Then, air may no longer flow between the first and second container portions. The predetermined angle is for example an angle between 5° and 25°. Further, the predetermined angle may be smaller than the maximum inclination angle of the brake fluid surface for which the brake fluid does not enter in contact with the valve.

When the container is inclined by at least the predetermined angle, thereby blocking the air flow between the first and the second container portions, the air in the first container portion is efficiently trapped in an air trapping portion of the first container portion, thereby preventing a leakage of the fluid outside the container.

According to a further embodiment, the container includes the cap.

According to a further embodiment, a vehicle comprising the fluid container described above and below is provided. In particular, the container may be appropriately mounted into the vehicle. The container may be a brake fluid container.

According to a further embodiment, a method for storing a fluid in a fluid container is provided. The method comprises: closing an inlet of the container arranged at a top wall or top edge of the container with a cap coupling with the inlet, the cap comprising a valve having a predetermined opening pressure threshold; and trapping air in an air trapping volume formed by an inner wall provided in the container protruding from around the inlet into the interior space of the container, the air trapping volume being delimited by the inlet, the inner wall, the cap and a fluid surface inside the container and the protrusion of the inner wall being configured such that the valve remains separated from the fluid by the air trapped in the air trapping volume if the fluid surface is inclined about an axis.

The user of the fluid container can easily fill the fluid into the container and close the container, thereby trapping the air in the air trapping volume. The container can then be used in the vehicle without risking any spillage of fluid.

The features described above and below in conjunction with the fluid container also apply to the method for storing a fluid in the container and to the vehicle comprising the container.

Further possible implementations or alternative solutions of the fluid container, the vehicle and the method for storing a fluid also encompass combinations - that are not explicitly mentioned herein - of features described above or below with regard to the embodiments. The person skilled in the art may also add individual or isolated aspects and features to the most basic form of the invention.

Further embodiments, features and advantages of the present fluid container will become apparent from the subsequent description and dependent claims, taken in conjunction with the accompanying drawings, in which:
Fig. 1 shows a container according to a first embodiment not forming part of the claimed invention;
Fig. 2 shows a container according to a second embodiment not forming part of the claimed invention with an inclined fluid surface;
Fig. 3 shows an inclined container according to a third embodiment;
Fig. 4 shows the interior of the container according to the third embodiment;
Fig. 5 shows a first container portion of the container according to the third embodiment;
Fig. 6 shows the first container portion of the container according to the third embodiment with fluid in a rest state;
Fig. 7 shows the first container portion of the container according to the third embodiment with fluid in an inclined state;
Fig. 8 shows a sectional view of the container according to the third embodiment;
Fig. 9 shows a view from above of the container according to the first or third embodiment;
Fig. 10 shows a method for storing a fluid in a fluid container according to an embodiment; and
Fig. 11 shows a vehicle comprising the fluid container according to an embodiment.

In the Figures, like reference numerals designate like or functionally equivalent elements, unless otherwise indicated.

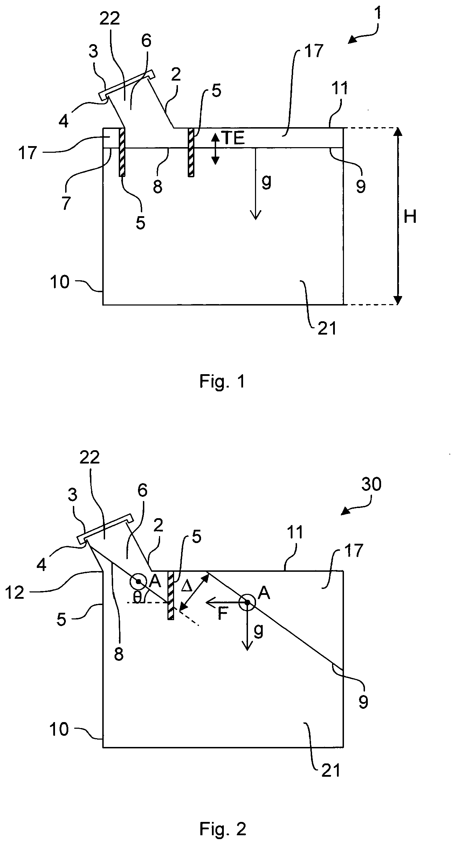

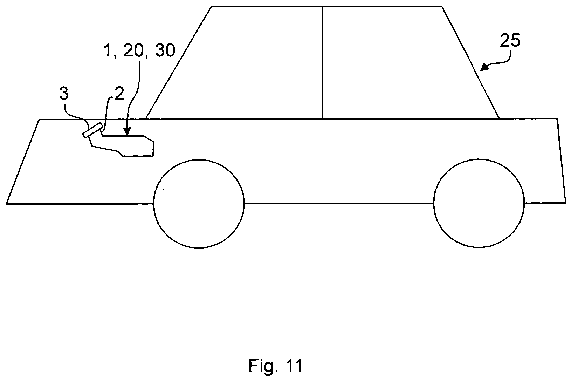

Fig. 1 shows a container 1 according to a first embodiment not forming part of the claimed invention. The container 1 is a fluid container, in particular a brake fluid container, comprising an inlet 2, a cap 3 with a valve 4, an inner wall 5, an air trapping volume 6, a side wall 10 and a top wall 11. The container 1 may be arranged in a vehicle, in particular in a car 25 as shown in Fig. 11.

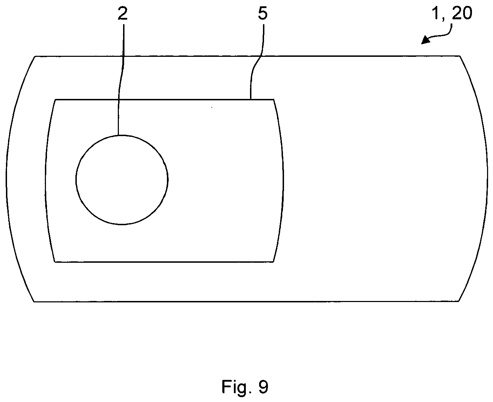

The container 1 has a cuboid shape with a height H corresponding to a maximum height. Fig. 9 shows a view of the container 1 from above.

On its top wall 11, the container 1 comprises an inlet 2 for filling fluid, here brake fluid 21, into the container 1. Said inlet 2 may be round in cross section as shown in Fig. 9. The inlet 2 is protruding towards the exterior of the container 1, thereby forming a container neck. The inlet 2 is inclined with respect to the top wall 11 to facilitate the filling of the brake fluid 21 into the container 1 by a user, in particular when the container 1 is arranged in the car 25. The inlet 2 may be orientated towards the front of the car 25 when the container 1 is arranged in the car 25.

The inlet 2 comprises an outer winding for screwing the removable cap 3 thereon. The cap 3 comprises a diaphragm for sealing the container 1 when it is closed with the cap 3. The diaphragm may comprise a hole as a valve 4 for equalizing the pressure between the inside and the outside of the container 1.

The container 1 comprises an inner wall 5 protruding around the inlet 2 towards the inside of the container 1. In particular, the inner wall 5 protrudes into the interior of the container 1 by about one third of the maximum height H of the container 1. The inner wall 5 is here formed integrally with the container 1, in particular with the top wall 11. When seen from above, the inner wall 5 entirely surrounds the inlet 2, as shown in Fig. 9. The cross section of the inner wall 5 does not have to be substantially rectangular as in Fig. 9. Rather, it may be round, for example.

The brake fluid 21 is filled into the container 1 up to a level indicated by a brake fluid surface 7 as a fluid surface. The brake fluid surface 7 is split into a first brake fluid surface section 8 as a first fluid surface section and a second brake fluid surface section 9 as a second fluid surface section by the inner wall 5. Namely, the portion of the brake fluid section 7 defined/surrounded by the inner wall 5 corresponds to the first brake fluid surface section 8. The first brake fluid surface section 8 and the second brake fluid surface section 9 are at an equal level.

In Fig. 1, the container 1 is shown in its rest position. This is, the container 1 is arranged horizontally in the car 25 at rest on a flat road. The brake fluid surface 7 is also in a rest position. Namely, it is perpendicular to the gravity g.

The air trapping volume 6 formed within the container 1 is confined by the cap 3, the inlet 2, the inner wall 5 and the first brake fluid surface section 8. The air trapping volume 6 comprises air which separates the brake fluid surface 7 from the valve 4.

Moreover, the container may comprise some additional air 17 that is trapped between the second brake fluid surface section 9, the top wall 11, the side wall 10 and the inner wall 5.

The pressure of the air 22 trapped in the air trapping volume 6 is lower than an opening pressure threshold of the valve 4. If the level of the brake fluid 21 and/or of the air inside the container 1 increases due to thermal expansion TE, the pressure of the air 22 trapped in the air trapping volume 6 can become larger than the opening pressure threshold of the valve 4, thereby opening the valve 4 for pressure equalization with the outside of the container 1.

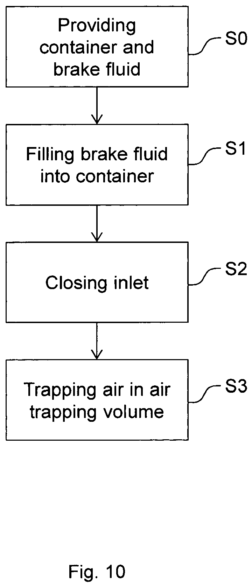

The container 1 is configured to store the brake fluid 21 according to a method for storing a brake fluid described in Fig. 10. Said method will be described below.

Fig. 2 shows a container 30 according to a second embodiment not forming part of the claimed invention with an inclined brake fluid surface. The container 30 of Fig. 2 differs from the container of Fig. 1 in such a way that the inlet 2 is located on a top edge 12 of the container 30 and that the inner wall 5 is partly formed by the side wall 10 as a container wall. According to a further embodiment, the inner wall 5 extends the inlet 2 into the interior space of the container 1.

Moreover, the container 30 is not shown in its rest position in Fig. 2. Rather, it is shown in a state in which the container 30, which may be placed inside the vehicle, is decelerated by a force F, in particular by decelerating the car 25. Thereby, the brake fluid 21 inside the container 30 is pushed towards the left side wall of the container 1. The first brake fluid surface section 8 and the second brake fluid surface section 9 are respectively inclined by an angle θ with respect to their rest positions perpendicular to gravity g shown in Fig. 1. In Fig. 2, the first brake fluid surface section 8 and the second brake fluid surface section 9 are tilted/inclined about the axis A pointing out of the page. The inclination angle θ is here substantially 25°.

A height difference Δ between the first brake fluid surface section 8 and the second brake fluid surface section 9 is indicated on Fig. 2.

Even in the state in which the first and second brake fluid surface sections 8, 9 are inclined, the air 22 trapped in the air trapping volume 6 separates the valve 4 from the brake fluid 21. Thereby, a spillage of the brake fluid 21 is avoided.

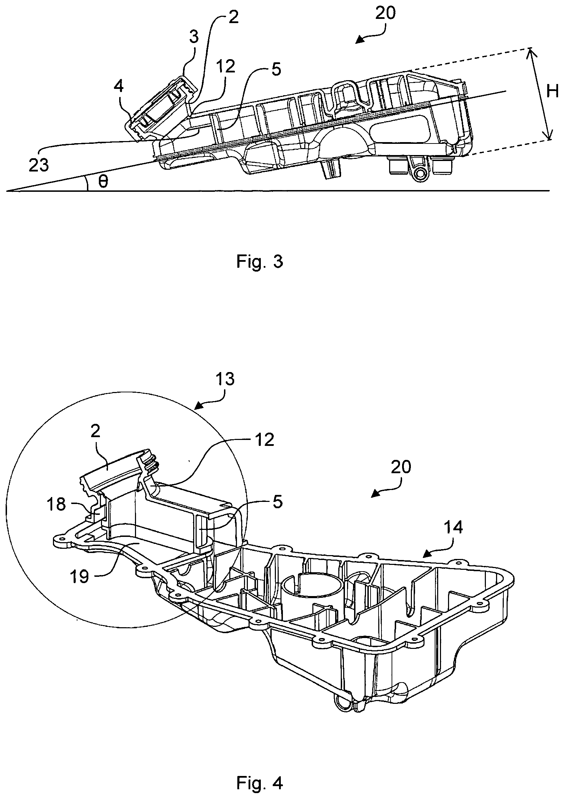

A container 20 according to a third embodiment according to the invention will be described in view of Figs. 3 to 9.

The container 20 differs from the containers 1 and 30 through its shape. Namely, as shown in Fig. 3, the container 20 has an elongated shape with the inlet 2 placed at the top edge 12 of the container 20. The container 20 can be placed in a car 25 as the vehicle, as shown in Fig. 11. Therein, the inlet 2 is located towards the front of the car 25 to facilitate a user's access.

In Fig. 3, a designated maximum filling level 23 of the container 20 is indicated by a mark on the container 20. If the container 20 is made of transparent plastic, one can conveniently see if the amount of brake fluid 21 within the container 20 is too high. The container 20 is made for being filled with an amount of brake fluid of more than 80% of the designated maximum filling level 23 without leaking.

The inner wall 5 of the container 20 is vertical in the rest position R of the container. The inner wall 5 separates the container 20 into a first and a second container portion 13, 14, as indicated in Fig. 4. The first container portion 13 is delimited by the inlet 2, the inner wall 5 and a bottom separating wall 19 in horizontal position. In the third embodiment, the bottom separating wall 19 is formed by a bottom wall of the container 20. The first and a second container portion 13, 14 are communicatively connected to each other through a conduit 18, which is substantially wound around the first container portion 13. The conduit 18 allows a flow of the brake fluid 21 as well as a flow of air between the first and second container portions 13, 14. The first container portion 13 is located above and shifted from the second container portion 14.

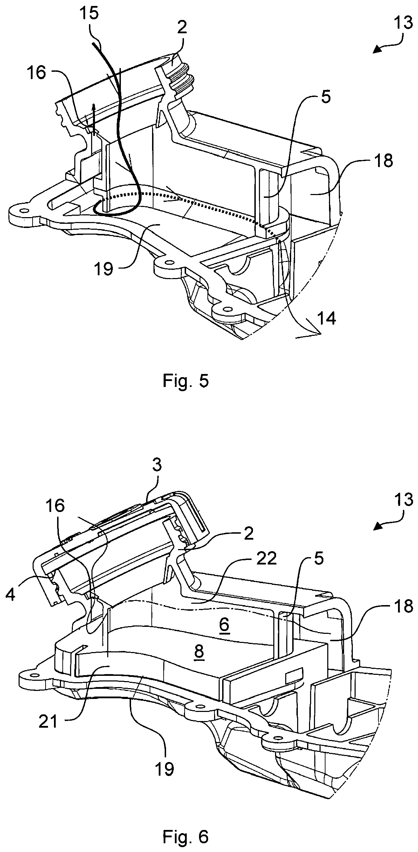

Figs. 5, 6 and 7 show a detailed view of the first container portion 13. In Fig. 5, the brake fluid 21 is filled into the container 20 through the inlet 20 which has the corresponding cap 3 removed. The brake fluid 21 first enters the first container portion 13, then traverses the conduit 18, and finally reaches the second container portion 14. The brake fluid 21 thereby follows the brake fluid path 15. While filling container 20 with the brake fluid 21, the initial air from the interior of the container 20 is evacuated to the outside of the container 20 through the conduit mouth 16 provided at the conduit 18. The conduit mouth 16 is here an opening or an end of the conduit 18 flowing into the first container portion 13.

As the container 20 is filled with brake fluid 21, it is first only the second container portion 14 that fills up. Then, when the brake fluid 21 reaches the height of the first container portion 13, the first container portion 13 is filled in turn. In Fig. 6, the level of brake fluid 21 in the first container portion 13 is indicated by the first brake fluid surface section 8. The level of the brake fluid 21 is below the conduit mouth 16, so that air can flow between the first and second container portions 13, 14. Moreover, said first brake fluid surface section 8 is smooth and horizontal; the brake fluid 21 is in a rest position. The second brake fluid surface section 9 (not illustrated) is at the same level as the first brake fluid surface section 8. The air 22 trapped in the air trapping volume 6 ensures that the brake fluid 21 does not contact the valve 4, thereby avoiding leakage of the brake fluid 21.

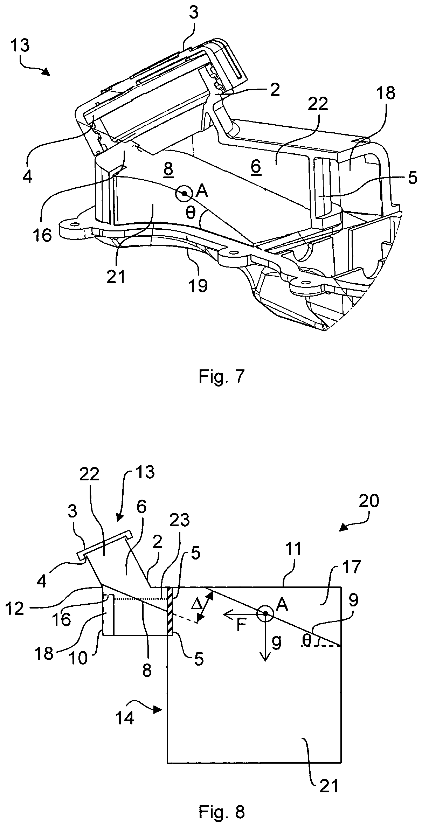

Fig. 7 shows the brake fluid 21 in an inclined state. This may be the case when the container 20 is inclined as shown in Fig. 3, for example when the car 25 circulates on an inclined road. Alternatively, the car 25 in which the container is arranged may accelerate or decelerate. Even though the first brake fluid surface section 8 is inclined by an angle θ around the axis A, the brake fluid 21 still does not enter into contact with the valve 4 comprised in the cap 3 because the air 22 trapped in the air trapping volume 6 separates the brake fluid 21 from the valve 4. In Fig. 7, the brake fluid surface 7, in particular the first brake fluid surface 8, is inclined by an angle θ that is greater than the predetermined angle at which the brake fluid enters into contact with the conduit mouth 16. Thus, the fluid 21 blocks the conduit mouth 16 in the inclined state shown in Fig. 7. Thereby, air cannot flow between the first and second container portions 13, 14, and the air 22 remains trapped in the air trapping volume 6. Thereby, a leakage of the brake fluid 21 is prevented.

Fig. 8 shows a sectional view of the container 20 according to the third embodiment with the brake fluid 21 being in the inclined state, as in Fig. 7. Since the fluid 21 blocks the conduit mouth 16, the level of the first brake fluid surface section 8 is lower than that of the second brake fluid surface section 9 by an amount Δ. This is a result of the air 22 being trapped in the air trapping volume 6 since it cannot escape through the conduit mouth 16 or the conduit 18 to reach the second container portion 14.

Moreover, in Fig. 8, the designated or maximum filling level 23 of the container 20 is located slightly below the conduit mouth 16, as indicated by the dots in the figure. Thereby, it can be guaranteed that no fluid 21 blocks the conduit mouth 16, and air can freely flow between the first and second container portions 13, 14, when the fluid 21 is at rest.

The containers 1, 20, 30 of the first to third embodiments are all configured to implement the method for storing the brake fluid 21 in the respective container 1, 20, 30 shown in Fig. 10. Namely, in a step S0, the container 1, 20, 30 and the brake fluid 21 are provided. In a step S1, the brake fluid 21 is filled into the container 1, 20, 30 through the inlet 2. In a step S2, the inlet 2 is closes by a cap 3 comprising a valve 4. In a step S3, which may be simultaneous to the step S2, air 22 is trapped in the air trapping volume 6.

Although the present invention has been described in accordance with preferred embodiments, it is obvious for the person skilled in the art that modifications are possible in all embodiments within the scope of the appended claims. For example, the container and inlet may have any shape. The valve can be of any valve type. The container may be mounted in any type of vehicle. Instead of brake fluid, any type of fluid may be used. The shape, material and size of the inner wall may be modified in any manner.

## Claims

1. A container (1, 20, 30) for a fluid (21) in a vehicle (25), comprising:
an inlet (2) for filling the fluid (21) into the container (1), the inlet (1) being arranged at a top wall (11) or top edge (12) of the container (1), the inlet (2) being adapted to couple with a cap (3) for closing the inlet (2), the cap (3) comprising a valve (4) for pressure equalization;
an inner wall (5) protruding from around the inlet (2) into the interior space of the container (1), thereby forming an air trapping volume (6) for trapping air (22); wherein
the air trapping volume (6) is delimited by the inlet (2), the inner wall (5), the cap (3) and a fluid surface (7) inside the container (1) when the container (1) is used;
wherein the inner wall (5) is configured such that the cap (3) and/or the valve (4) remains separated from the fluid (21) by the air (22) trapped in the air trapping volume (6) if the fluid surface (7) is inclined about an axis (A),
wherein the inner wall (5) separates the interior of the container (1) into a first and a second container portion (13, 14), the first and second container portions (13, 14) being communicatively connected to allow a flow of fluid (21) there between,
**characterized in that** the container (1, 20, 30) comprises a conduit (18) for communicatively coupling the first and second container portions (13, 14), the conduit (18) comprising a conduit mouth (16) to allow a flow of air between the first and second container portions (13, 14) when the conduit mouth (16) is not covered by the fluid (21), wherein the designated maximum filling level (23) of the container (1, 20, 30) corresponds to an amount of fluid in the container (1, 20, 30) having more than 75% up to 90% of an inner volume of the container and lies below the conduit mouth (16) such that the air flow is at least allowed in the container's rest position.

2. The container according to claim 1, wherein the inner wall (15) separates the fluid surface (7) into a first fluid surface section (8) and a second fluid surface section (9), the first fluid surface section (8) being in contact with the air trapping volume (6).

3. The container according to claim 2, wherein the container (1) includes the cap (3), wherein the valve (4) has a predetermined opening pressure threshold which is smaller than a pressure caused by a thermal expansion of the fluid (21) and/or of the air contained in the container (1), and larger than a pressure inside the air trapping volume (6) caused by inclining the fluid surface (7) and a height difference (Δ) between the first and the second fluid surface section (8, 9) along an axis that is perpendicular to the first and second fluid surface sections (8, 9) when the fluid surface (7) is inclined.

4. The container according to any one of claims 1 to 3, wherein a part of the inner wall (5) is formed by a container wall (10).

5. The container according to any one of claims 1 to 4, wherein the inner wall (5) protrudes into the interior space of the container (1) by at least one fifth or one quarter, in particular by at least one third of a maximum height (H) of the container (1).

6. The container according to any one of claims 1 to 5, wherein a designated maximum filling level (23) of the fluid (21) in the container (1) is above 80% of an interior volume of the container (1).

7. The container according to any one of claims 1 to 6, wherein the conduit mouth (16) is located such as to be covered by the fluid (21) when the fluid surface (7) is inclined about the axis (A) by more than a predetermined angle, thereby blocking the flow of air between the first and second container portions (13, 14).

8. A vehicle (25) comprising the fluid container (1, 20, 30) according to any one of claims 1 to 7.

9. A method for storing a fluid (21) in a fluid container (1, 20, 30), comprising:
providing a fluid container (1, 20, 30) according to any one of claims 1 to 8,
closing an inlet (2) of the container (1) arranged at a top wall or top edge of the container (1) with a cap (3), the cap (3) comprising a valve (4) for pressure equalization; and
trapping air (22) in an air trapping volume (6) formed by an inner wall (5) provided in the container (1) protruding from around the inlet (2) into the interior space of the container (1), the air trapping volume (6) being delimited by the inlet (2), the inner wall (5), the cap (3) and a fluid surface (7) inside the container (1) and the inner wall (5) being configured such that the valve (4) remains separated from the fluid (21) by the air (22) trapped in the air trapping volume (6) if the fluid surface (7) is inclined about an axis (A).

## Patentansprüche

1. Behälter (1, 20, 30) für ein Fluid (21) in einem Fahrzeug (25), umfassend:
einen Einlass (2) zum Füllen des Fluids (21) in den Behälter (1), wobei der Einlass (1) an einer oberen Wand (11) oder einer oberen Kante (12) des Behälters (1) angeordnet ist, wobei der Einlass (2) ausgelegt ist, um mit einer Verschlusskappe (3) zum Verschließen des Einlasses (2) verbunden zu werden, wobei die Verschlusskappe (3) ein Ventil (4) für den Druckausgleich umfasst; eine um den Einlass (2) in den Innenraum des Behälters (1) vorstehende Innenwand (5), wodurch ein Lufteinschlussvolumen (6) zum Einschließen von Luft (22) gebildet wird; wobei das Lufteinschlussvolumen (6) durch den Einlass (2), die Innenwand (5), die Verschlusskappe (3) und eine Fluidoberfläche (7) innerhalb des Behälters (1) gebildet wird, wenn der Behälter (1) verwendet wird; wobei die Innenwand (5) so ausgelegt ist, dass die Verschlusskappe (3) und/oder das Ventil (4) durch die in dem Lufteinschlussvolumen (6) eingeschlossene Luft (22) vom Fluid (21) getrennt bleiben, wenn die Fluidoberfläche (7) um eine Achse (A) geneigt ist, wobei die Innenwand (5) den Innenraum des Behälters (1) in einen ersten und einen zweiten Behälterbereich (13, 14) aufteilt, wobei der erste und zweite Behälterbereich (13, 14) kommunikativ verbunden sind, um so einen Fluidstrom (21) zwischen ihnen zu ermöglichen, **dadurch gekennzeichnet, dass** der Behälter (1, 20, 30) eine Rohrleitung (18) für ein kommunikatives Verbinden des ersten und zweiten Behälterbereichs (13, 14) umfasst, wobei die Rohrleitung (18) eine Rohrleitungsmündung (16) umfasst, um eine Luftströmung zwischen dem ersten und zweiten Behälterbereich (13, 14) zu ermöglichen, wenn die Rohrleitungsmündung (16) nicht durch das Fluid (21) bedeckt ist, wobei die maximal festgelegte Füllhöhe (23) des Behälters (1, 20, 30) einer Fluidmenge in dem Behälter (1, 20, 30) mit mehr als 75 % bis zu 90 % eines Innenvolumens des Behälters entspricht und unterhalb der Rohrleitungsmündung (16) liegt, so dass die Luftströmung wenigstens in der Ruheposition des Behälters ermöglicht ist.

2. Behälter nach Anspruch 1, wobei die Innenwand (15) die Fluidoberfläche (7) in einen ersten Fluidoberflächenbereich (8) und einen zweiten Fluidoberflächenbereich (9) teilt, wobei der erste Fluidoberflächenbereich (8) in Kontakt mit dem Lufteinschlussvolumen (6) ist.

3. Behälter nach Anspruch 2, wobei der Behälter (1) die Verschlusskappe (3) beinhaltet, wobei das Ventil (4) eine vorher festgelegte Öffnungsdruckschwelle hat, die kleiner als ein durch eine Wärmeausdehnung des Fluids (21) und/oder der in dem Behälter (1) enthaltenen Luft verursachter Druck ist, und größer als ein innerhalb des Lufteinschlussvolumens (6) durch die Neigung der Fluidoberfläche (7) und des Höhenunterschieds (Δ) zwischen dem ersten und zweiten Fluidoberflächenbereich (8, 9) entlang einer senkrecht zum ersten und zweiten Fluidoberflächenbereich (8, 9) verlaufenden Achse verursachter Druck ist, wenn die Fluidoberfläche (7) geneigt ist.

4. Behälter nach einem der Ansprüche 1 bis 3, wobei ein Teil der Innenwand (5) von einer Behälterwand (10) gebildet wird.

5. Behälter nach einem der Ansprüche 1 bis 4, wobei die Innenwand (5) in den Innenraum des Behälter (1) um mindestens ein Fünftel oder ein Viertel, insbesondere um mindestens ein Drittel der maximalen Höhe (H) des Behälters (1) hervorsteht.

6. Behälter nach einem der Ansprüche 1 bis 5, wobei ein festgelegter maximaler Füllstand (23) des Fluids (21) in dem Behälter (1) oberhalb von 80 % eines Innenraumvolumens des Behälters (1) liegt.

7. Behälter nach einem der Ansprüche 1 bis 6, wobei die Rohrleitungsmündung (16) so angeordnet ist, dass sie von dem Fluid (21) bedeckt wird, wenn die Fluidoberfläche (7) um die Achse (A) um mehr als um einen vorher festgelegten Winkel geneigt ist, so dass der Luftstrom zwischen dem ersten und zweiten Behälterabschnitt (13, 14) abgeblockt wird.

8. Fahrzeug (25) umfassend den Fluidbehälter (1, 20, 30) nach einem der Ansprüche 1 bis 7.

9. Verfahren zum Lagern eines Fluids (21) in einem Fluidbehälter (1, 20, 30), umfassend:
Bereitstellen eines Fluidbehälters (1, 20, 30) nach einem der Ansprüche 1 bis 8, Verschließen eines Einlasses (2) des Behälters (1), der an einer oberen Wand oder oberen Kante des Behälters (1) mit einer Verschlusskappe (3) angeordnet ist, wobei die Verschlusskappe (3) ein Ventil (4) für den Druckausgleich umfasst; und
Einschließen von Luft (22) in einem Lufteinschlussvolumen (6), das durch eine in dem Behälter (1) vorgesehene Innenwand (5), die um den Einlass (2) in den Innenraum des Behälters (1) vorsteht, gebildet wird; wobei das Lufteinschlussvolumen (6) durch den Einlass (2), die Innenwand (5), die Verschlusskappe (3) und eine Fluidoberfläche (7) innerhalb des Behälters (1) begrenzt wird und die Innenwand (5) so ausgelegt ist, dass das Ventil (4) von dem Fluid (21) durch die in dem Lufteinschlussvolumen (6) eingeschlossene Luft (22) getrennt bleibt, wenn die Fluidoberfläche (7) um eine Achse (A) geneigt ist.

## Revendications

1. Récipient (1, 20, 30) pour un fluide (21) dans un véhicule (25), comprenant :
une entrée (2) pour le remplissage du fluide (21) dans le récipient (1), l'entrée (1) étant agencée au niveau d'une paroi supérieure (11) ou d'un bord supérieur (12) du récipient (1), l'entrée (2) étant conçue pour se coupler à un capuchon (3) pour fermer l'entrée (2), le capuchon (3) comprenant une soupape (4) pour égalisation de pression ;
une paroi interne (5) faisant saillie autour de l'entrée (2) dans l'espace intérieur du récipient (1), ce qui forme un volume de piégeage d'air (6) pour piéger l'air (22) ; dans lequel le volume de piégeage d'air (6) est délimité par l'entrée (2), la paroi interne (5), le capuchon (3) et une surface de fluide (7) à l'intérieur du récipient (1) lorsque le récipient (1) est utilisé ; dans lequel la paroi interne (5) est configurée de sorte que le capuchon (3) et/ou la soupape (4) restent séparés du fluide (21) par l'air (22) piégé dans le volume de piégeage d'air (6) si la surface de fluide (7) est inclinée autour d'un axe (A), dans lequel la paroi interne (5) sépare l'intérieur du récipient (1) en une première et une seconde partie de récipient (13, 14), les première et seconde parties de récipient (13, 14) étant reliées par communication pour permettre un écoulement de fluide (21) entre elles, **caractérisé en ce que** le récipient (1, 20, 30) comprend un conduit (18) pour coupler par communications les première et seconde parties de récipient (13, 14), le conduit (18) comprenant une embouchure de conduit (16) pour permettre un écoulement d'air entre les première et seconde parties de récipient (13, 14) lorsque l'embouchure de conduit (16) n'est pas couverte par le fluide (21), dans lequel le niveau de remplissage maximal désigné (23) du récipient (1, 20, 30) correspond à une quantité de fluide dans le récipient (1, 20, 30) ayant plus de 75 % et allant jusqu'à 90 % d'un volume interne du récipient et se trouve en dessous de l'embouchure de conduit (16) de sorte que l'écoulement d'air est au moins autorisé dans la position de repos du récipient.

2. Récipient selon la revendication 1, dans lequel la paroi interne (15) sépare la surface de fluide (7) en une première section de surface de fluide (8) et une seconde section de surface de fluide (9), la première section de surface de fluide (8) étant en contact avec le volume de piégeage d'air (6).

3. Récipient selon la revendication 2, dans lequel le récipient (1) inclut le capuchon (3), dans lequel la soupape (4) a un seuil de pression d'ouverture prédéterminé qui est plus petit qu'une pression causée par une dilatation thermique du fluide (21) et/ou de l'air contenu dans le récipient (1), et plus grande qu'une pression à l'intérieur du volume de piégeage d'air (6) causée par une inclinaison de la surface de fluide (7) et une différence de hauteur (Δ) entre la première et la seconde section de surface de fluide (8, 9) le long d'un axe qui est perpendiculaire aux première et seconde sections de surface de fluide (8, 9) lorsque la surface de fluide (7) est inclinée.

4. Récipient selon l'une quelconque des revendications 1 à 3, dans lequel une partie de la paroi interne (5) est formée par une paroi de récipient (10).

5. Récipient selon l'une quelconque des revendications 1 à 4, dans lequel la paroi interne (5) fait saillie dans l'espace intérieur du récipient (1) d'au moins un cinquième ou un quart, notamment d'au moins un tiers d'une hauteur maximale (H) du récipient (1).

6. Récipient selon l'une quelconque des revendications 1 à 5, dans lequel un niveau de remplissage maximal désigné (23) du fluide (21) dans le récipient (1) est au-dessus de 80 % d'un volume intérieur du récipient (1).

7. Récipient selon l'une quelconque des revendications 1 à 6, dans lequel l'embouchure de conduit (16) est située de façon à être couverte par le fluide (21) lorsque la surface de fluide (7) est inclinée autour de l'axe (A) de plus d'un angle prédéfini, ce qui bloque l'écoulement d'air entre les première et seconde parties de récipient (13, 14).

8. Véhicule (25) comprenant le récipient à fluide (1, 20, 30) selon l'une quelconque des revendications 1 à 7.

9. Procédé pour stocker un fluide (21) dans un récipient à fluide (1, 20, 30), comprenant :
la fourniture d'un récipient à fluide (1, 20, 30) selon l'une quelconque des revendications 1 à 8,
la fermeture d'une entrée (2) du récipient (1) agencée au niveau d'une paroi supérieure ou d'un bord supérieur du récipient (1) avec un capuchon (3), le capuchon (3) comprenant une soupape (4) pour égalisation de pression ; et
le piégeage d'air (22) dans un volume de piégeage d'air (6) formé par une paroi interne (5) fournie dans le récipient (1) faisant saillie autour de l'entrée (2) dans l'espace intérieur du récipient (1), le volume de piégeage d'air (6) étant délimité par l'entrée (2), la paroi interne (5), le capuchon (3) et une surface de fluide (7) à l'intérieur du récipient (1) et la paroi interne (5) étant configurée de sorte que la soupape (4) reste séparée du fluide (21) par l'air (22) piégé dans le volume de piégeage d'air (6) si la surface de fluide (7) est inclinée autour d'un axe (A).
